# EUROPÄISCHE PATENTSCHRIFT

(11) **EP 0 958 461 B1**
(45) Veröffentlichungstag und Bekanntmachung des Hinweises auf die Patenterteilung: **29.05.2002**
(21) Anmeldenummer: 98905363.2
(22) Anmeldetag: 29.01.1998
(51) Int. Cl.: F16D 3/74, F16D 3/78, F16D 3/50

(54) **WELLENKUPPLUNG MIT KÜHLELEMENTEN**
SHAFT COUPLING WITH COOLING ELEMENTS
ACCOUPLEMENT D'ARBRES A ELEMENTS DE REFROIDISSEMENT

(30) Priorität: 04.02.1997 DE 19703936
(43) Veröffentlichungstag der Anmeldung: 24.11.1999
(73) Patentinhaber: Hackforth GmbH & Co. KG, 44653 Herne (DE)
(72) Erfinder: WALTER, Jürgen, D-45721 Haltern (DE); FALZ, Ulrich, D-44267 Dortmund (DE)
(74) Vertreter: Harazim, Eugen, Dipl.-Phys.
(86) Internationale Anmeldenummer: EP9800464
(87) Internationale Veröffentlichungsnummer: WO9834039

(56) Entgegenhaltungen:
- FR-A- 2 035 341
- FR-A- 2 613 006
- US-A- 3 988 907

## Beschreibung

Die Erfindung betrifft eine Wellenkupplung mit mindestens einem einstückigen, elastischen Übertragungselement zur Drehmomentübertragung, an dem an- und abtriebsseitig Anschlußelemente fest angebracht sind.

Derartige Kupplungen, die typischerweise zur Drehmomentübertragung im Antriebsstrang zwischen Motor und Getriebe angeordnet sind, sind im Stand der Technik in einer Vielzahl von unterschiedlichen Ausführungsformen bekannt. Diesen mitunter in ihrer konkreten technischen Ausgestaltung erheblich voneinander abweichenden Bauformen ist gemeinsam, daß das Drehmoment zwischen An- und Abtrieb ausschließlich über elastisch verformbare Übertragungselemente, beispielsweise Gummikörper, übertragen wird. Zur Montage zwischen den Kupplungshälften sind diese in der Regel beidseitig mit metallischen Anschlußelementen wie Anschlußflanschen oder dergleichen versehen.

Eine der wesentlichen Aufgaben einer solchen elastischen Wellenkupplung besteht neben der Übertragung eines mittleren Antriebsdrehmoments darin, den Antriebsstrang von schädlichen Drehmomentspitzen des Antriebsaggregates abzukoppeln. Solche Drehmomentschwankungen werden beispielsweise durch Drehschwingungen verursacht, die insbesondere in Kurbeiwellen von schwungmassenarmen Großdieselmotoren angeregt werden. Die elastischen Übertragungselemente werden hinsichtlich ihrer Elastizität und Dämpfungswirkung derart ausgelegt, daß sie diese dynamischen Störungen größtenteils absorbieren und somit das abtriebsseitige Drehmoment einen gleichmäßigen Verlauf erhält.

Ein grundlegendes Problem ergibt sich daraus, daß die vorbeschriebenen dynamischen Belastungen beim Walken des elastischen Körpers in Wärme umgesetzt werden. Dadurch kann es zu lokalen Überhitzungen kommen, da die verwendeten Elastomerwerkstoffe, wie beispielsweise Gummi, eine ausgesprochen geringe Wärmeleitfähigkeit haben. Falls durch diese thermische Belastung die zulässige Grenztemperatur des elastischen Werkstoffes überschritten wird, treten Schäden auf, die zu einem vorzeitigen Verschleiß der Kupplung führen.

Die Beherrschung der thermischen Probleme bei größer werdenden Drehmomenten wird dadurch erschwert, daß das Verhältnis von thermischer Belastbarkeit zur mechanischer Belastbarkeit mit größer werdenden Abmessungen des elastischen Übertragungselementes immer ungünstiger wird. Insbesondere in den Kernbereichen besteht die Gefahr lokaler thermischer Überlastungen und daraus resultierender Schäden.

Um eine höhere thermische Belastbarkeit zu erreichen, ist bereits in der DE 3710390 C2 vorgeschlagen worden, die elastischen Gummikörper einschließlich der Anschlußplatten mit durchgehenden Fenstern zu versehen. Die Fensteröffnungen verlaufen dabei durch die Kernbereiche, die vormals der höchsten thermischen Beanspruchung ausgesetzt waren. Durch die Luftzirkulation durch die Öffnungen wird der Gummikörper zusätzlich gekühlt, so daß die Kupplung insgesamt höher belastbar wird.

Die vorbeschriebene Lösung bietet zwar gegenüber einstückigen, massiven Gummikörpern deutliche Vorteile, ist jedoch ebenfalls durch prinzipbedingte Grenzwerte limitiert. Der Querschnitt der Fensteröffnungen kann nämlich nicht beliebig groß gestaltet werden, da dadurch in gleichem Maße der Querschnitt des elastischen Körpers, der die gesamte dynamische Belastung aufnimmt, verkleinert wird. Eine weitere Vergrößerung der Fenster über den optimalen Wert hinaus führt deswegen wiederum zu einer Verringerung der Belastbarkeit.

Selbst bei einer optimalen Auslegung der Fenster hat sich jedoch herausgestellt, daß kleine Kernzonen, sog. Wärmenester, verbleiben. Diese Bereiche sind zwar gegenüber den massiven Bauformen räumlich verlagert und treten auch erst bei höheren Beanspruchungen auf, markieren aber dennoch eine Grenze, deren Überschreitung wiederum zu Schäden führt.

Ein grundsätzliches Problem ergibt sich daraus, daß eine Tendenz zu immer höheren Leistungsdichten bei möglichst kleinem Bauvolumen besteht, es jedoch mit den nach dem Stand der Technik bekannten Maßnahmen nicht möglich ist, die Belastbarkeit von Kupplungen aufgrund der thermischen Beanspruchung der elastischen Übertragungselemente zu erhöhen.

Zur Lösung dieses Problems schlägt die Erfindung für eine Wellenkupplung der Eingangs genannten Art vor, daß im Übertragungselement mindestens ein Kühlelement aus gut wärmeleitenden Material unlösbar eingebettet ist, wobei das Kühlelement durch einen Kernbereich maximaler Wärmeentwicklung und einen relativ dazu kühleren Außenbereich des Übertragungselementes verläuft.

Bei dem Kühlelement gemäß der Erfindung handelt es sich um einen elastisch verformbaren Körper, der aus einem gut wärmeleitenden Material besteht, d.h., welches zumindest eine bessere Wärmeleitfähigkeit aufweist als der Werkstoff des elastischen Übertragungselementes, beispielsweise Gummi. Erfindungsgemäß ist dieses Kühlelement so in dem Übertragungselement angeordnet, daß es eine Wärmebrücke bildet zwischen den Kernbereichen, in denen durch hohe dynamische Belastungen eine maximale thermische Beanspruchung auftritt, d.h. den Wärmenestern, und den Außenbereichen des Übertragungselementes, die naturgemäß durch die Wärmeabgabe nach außen kühler sind.

Der besondere Vorteil der Erfindung ergibt sich daraus, daß durch die Anordnung des oder der Kühlelemente bzw. Wärmeleiter gezielt die Wärme aus den kritischen Bereichen in kühlere Zonen abgeleitet wird. Dabei können die mechanischen und thermischen Eigenschaften des Kühlelementes derart dem elastischen Werkstoff des Übertragungselementes angepaßt werden, daß keine wesentliche Veränderung der elastischen Übertragungseigenschaften der Kupplung auftritt, d.h. eine unerwünschte Schwächung oder Verhärtung. Das kann dadurch erreicht werden, daß das Kühlelement so weit elastisch verformbar ist, daß es der Verformung des Übertragungselements folgen kann.

Dadurch, daß das Kühlelement insgesamt für eine gleichmäßigere Temperaturverteilung innerhalb des elastischen Körpers sorgt, d.h. geringere Temperaturgradienten auftreten, wird der thermische Verschleiß, der überproportional mit der Temperatur ansteigt, erheblich vermindert und damit die Lebensdauer der Übertragungselemente deutlich erhöht.

Die erfindungsgemäß ausgestalteten Übertragungselemente können grundsätzlich Körper aus einem beliebigen elastischen Werkstoff sein, nach dem Stand der Technik sind jedoch besonders leistungsfähige Übertragungselemente bekannt, die aus einem vulkanisierten Gummikörper bestehen, an dem metallische Anschlußelemente anvulkanisiert sind. Solche Gummikörper sind beispielsweise aus der bereits zitierten DE 3710390 C2 bekannt und zeichnen sich allgemein durch besondere Zuverlässigkeit aus. Erfindungsgemäß wird das Kühlelement bevorzugt in das Gummi mit einvulkanisiert, wodurch ein sicherer Halt gegeben ist und ein guter Wärmeübergang aus den Wärmenestern erfolgt.

Eine vorteilhafte Ausführungsform sieht vor, daß das Kühlelement ein biegeelastisches Kühlblech ist. Vorzugsweise handelt es sich dabei um ein dünnes Metallblech, welches gut wärmeleitend ist und hinsichtlich seiner mechanischen Eigenschaften und Abmessungen gut in das Übertragungselement integriert werden kann.

Eine alternative Ausführungsform sieht vor, daß das Kühlelement eine Mehrzahl von Wärmeleitfasern aufweist. Dabei kann es sich sowohl um ein flaches oder räumliches Bündel von parallel angeordneten Wärmeleitfasern oder
-fingern, beispielsweise Drähten, Bändern, Flachprofilen, Stäben oder dergleichen, als auch um kammartig ausgerichtete Lamellen, sowie Matten, Geflechte oder dergleichen handeln. Derartige Ausführungen haben den Vorteil, daß sie mechanisch besonders flexibel sind.

Vorteilhafte Weiterbildungen der Erfindung sehen vor, daß eine Seitenkante des Kühlelementes mit der Oberfläche des Übertragungselementes abschließt, d.h. bündig an dieser endet, oder nach außen über die Oberfläche vorsteht. Dadurch wird erreicht, daß die von dem Kühlelement aus dem Kernbereich abgezogene Wärme unmittelbar an die Umgebung abgegeben wird, so daß sich eine besonders effektive Kühlwirkung ergibt.

Sofern als Kühlelement ein Kühlblech verwendet wird, sollte dieses vorzugsweise aus hochfestem Federstahl bestehen. Ein dünnes Federstahlblech ist nämlich besonders biegeelastisch und hat eine gute thermische Leitfähigkeit. Gleichzeitig ist die Festigkeit bereits bei geringer Materialstärke hoch genug, um den mitunter relativ hohen inneren Kräften in dem Übertragungselement zu widerstehen.

Eine vorteilhafte Weiterbildung der Erfindung sieht vor, daß das Kühlblech mit mindestens einer Durchbrechung versehen ist. Indem das Kühlblech beispielsweise mit einer Vielzahl von Öffnungen perforiert ist, ergibt sich eine besonders innige Verbindung mit dem Material des elastischen Körpers, beispielsweise beim Einvulkanisieren in den Gummikörper. Eine weitere Funktion haben die Durchbrechungen, falls der elastische Übertragungskörper mit durchgehenden Kühlfenstern versehen ist, wobei sie mit diesem in Form und Größe korrespondieren und somit die Wärme auch an die durch die Fenster strömende Luft abgeben.

Grundsätzlich können alle bekannten Bauformen von elastischen Übertragungselementen zur Umsetzung der vorbeschriebenen Vorteile erfindungsgemäß gestaltet werden. Das Übertragungselement kann dabei gleichermaβen ein Torsionselement sein, bei dem die Drehmomenteinleitung über axiale Anschlußplatten oder - flansche erfolgt, oder auch als Drehschubelement ausgebildet sein, welches im wesentlichen die Form eines zylindrischen Rings hat und über die inneren und äußeren Radialflächen mit Drehmoment beaufschlagt wird.

Wird als Kühlelement ein Kühlblech eingesetzt, so sollte dessen Form und Anordnung zweckmäßigerweise jeweils auf die Art und die Form des elastischen Übertragungselementes abgestimmt werden, so daß bei dessen Verformung hauptsächlich Biegebeanspruchungen des Blechs auftreten. Aufgrund dieser Überlegungen ist es vorteilhaft, wenn das Kühlblech bei axialen Torsionselementen bezüglich der Kupplungsachse in einer Axialebene liegt, d.h. im wesentlichen die Form einer flachen Ringscheibe hat. Hingegen ist es bei Drehschubelementen angebracht, daß das Kühlblech auf einer zur Kupplungsachse koaxialen Zylinderfläche liegt, d.h. zylindrisch ge bogen ist.

Die erfindungsgemäße Lehre kann gleichermaßen vorteilhaft sowohl bei elastischen Wellenkupplungen eingesetzt werden, die ein einziges, einstückiges Übertragungselement aufweisen, als auch bei denen eine Mehrzahl von in Umfangsrichtung aufeinanderfolgenden, jeweils einstückigen, segmentförmigen Übertragungselementen installiert ist. Das erfindungsgemäße Kühlelement, beispielsweise ein Kühlblech, ist dabei ebenfalls radial segmentiert.

Zur Optimierung der Wärmeabfuhr aus dem elastischen Übertragungselement kann es vorteilhaft sein, daß es zusätzlich mit durchgehenden Kühlfenstern versehen ist, die sowohl die Anschlußelemente als auch den dazwischen liegenden elastischen Körper durchsetzen. Durch diese Kombination ergibt sich eine besonders vorteilhafte, synergetische Steigerung der Kühlwirkung.

Eine vorteilhafte Weiterbildung der Erfindung, die insbesondere im Hinblick auf die Betriebssicherheit Vorteile bringt, sieht vor, daß das Übertragungselement Sicherungsmittel aufweist, die das Kühlelement berührungslos umgreifen. Bei diesen Sicherungsmitteln handelt es sich um Anker oder Krallen, die entweder im Körper des Übertragungselementes verankert sind oder dessen Anschlußelemente umgreifen und radial das Kühlelement umfassen. Dadurch erhält man eine zusätzliche Absicherung für den Fall, daß sich, beispielsweise aufgrund extremer Überbeanspruchung, das Übertragungselement aus dem Material des elastischen Übertragungselementes löst und aufgrund der Fliehkraft radial nach außen herauszureißen droht. In solchen Notfällen wird das Übertragungselement durch die Sicherungsmittel radial abgefangen und daran gehindert, nach außen aus dem Übertragungselement auszutreten und Schäden oder Verletzungen anzurichten.

Eine vorteilhafte Ausgestaltung der Sicherungsmittel sieht vor, daß diese Rückhalteanker aufweisen, die das Kühlelement durchgreifen. Dabei handelt es sich beispielsweise um Stifte, die in den Kühlfenstern angeordnet sind.

Ausführungsbeispiele der Erfindung sind im folgenden anhand der Zeichnungen erläutert. Es zeigen im einzelnen:
- Figur 1: Eine Wellenkupplung mit segmentierten Übertragungselementen in einer teilweisen Axialansicht;
- Figur 2: Eine Schnittdarstellung entlang des Schnittes I-I gemäß Figur 1.

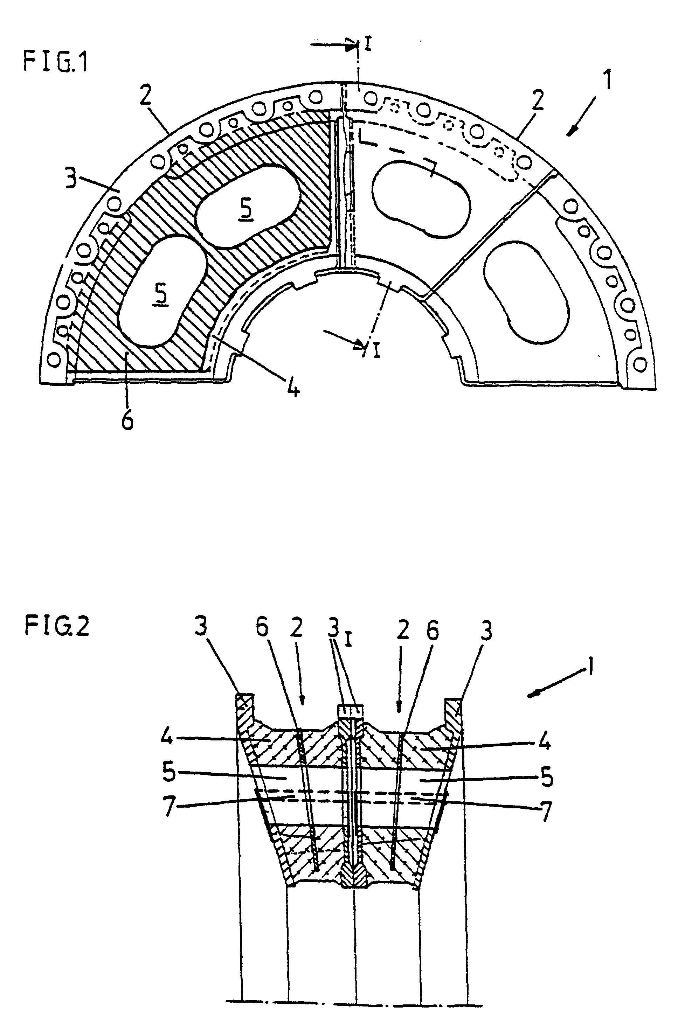

Figur 1 zeigt eine axiale Ansicht einer halb dargestellten Wellenkupplung 1, die aus ¼-Segmenten 2 gebildet wird.

Die einzelnen Segmente 2 weisen an- bzw. abtriebsseitig als Anschlußelemente axiale Anschlußflansche 3 auf, die üblicherweise aus Stahl bestehen und über ihren Umfang mit einer Vielzahl von Flanschbohrungen versehen sind.

Axial jeweils zwischen den Anschlußflanschen 3 sind als elastische Übertragungselemente als Gummikörper 4 ausgebildete Torsionselemente einvulkanisiert, die gleichfalls segmentiert sind. Die Abmessungen eines derartigen Gummikörpers 4 sind in Figur 1 in dem links dargestellten Segment 2 durch eine gestrichelte Umrandung angedeutet.

Sowohl die Anschlußflansche 3 als auch die Gummikörper 4 sind mit axial durchgehenden Kühlfenstern 5 versehen.

In dem links dargestellten Segment 2 ist durch eine Schraffur ein erfindungsgemäßes Kühlblech 6 eingezeichnet. Dieses besteht aus hochfestem Federstahl von beispielsweise 2-3 mm Dicke und ist in den Gummikörper 4 einvulkanisiert. Es liegt im wesentlichen flach bzw. leicht konusmantelförmig aufgewölbt in einer Axialebene im Gummikörper 4, wobei die Anordnung gemäß der Lehre der Erfindung so gewählt wird, daß es die zwischen den Kühlfenstern und den äußeren Bereichen auftretenden Wärmenester schneidet.

Das Kühlblech 6 ist so bemessen, daß dessen innerer Rand radial mit Abstand von der inneren Mantelfläche des Gummikörpers 4 beginnt, d.h. ganz in das Gummi eingebettet ist. Mit seinem Außenrand schließt das Kühlblech 6 bündig mit der äußeren Mantelfläche des Gummikörpers 4 ab. Wie dieser wird es ebenfalls von den Kühlfenstern 5 durchsetzt.

Die Anordnung der einzelnen Bauteile geht besonders deutlich aus Figur 2 hervor, welche einen Radialschnitt durch die Wellenkupplung 1 entlang der Linie I-l gemäß Figur 1 zeigt, wobei dieselben Bezugszeichen Verwendung finden. Wie aus dieser Darstellung hervorgeht, sind bei derartigen Wellenkupplungen 1 üblicherweise zwei aus gleichartigen Segmenten gebildete Kupplungsteile im Drehmomentfluß, d.h. axial hintereinander zusammengeflanscht.

Aus dieser Darstellung ist besonders deutlich die Anordnung der im Querschnitt etwa V-förmigen Gummikörper 4 mit den beidseitig aufvulkanisierten Anschlußflanschen 3 erkennbar. Dieser Darstellung ist im übrigen auch die schwimmende Lagerung der in die Gummikörper 4 einvulkanisierten erfindungsgemäßen Kühlbleche 6 entnehmbar. In diesem Zusammenhang bedeutet "schwimmende Lagerung", daß die Kühlbleche 6 in den Gummikörpern 4 nur durch die Adhäsionskräfte durch das Einvulkanisieren gehalten werden.

In dieser Darstellung schließen die äußeren Ränder der Kühlbleche 6 mit den äußeren Mantelflächen der Gummikörper 4 bündig ab; es ist jedoch gleichfalls denkbar, daß die Kühlbleche 6 über den Umfang der Gummikörper nach außen und/oder nach innen vorstehen, um gegebenenfalls eine noch bessere Wärmeabfuhr zu ermöglichen.

Grundsätzlich wird die Form der erfindungsgemäßen Kühlbleche 6 jeweils so der Form der Gummikörper 4 angepaßt, daß sie bei einer Torsionsbeanspruchung in Folge von Drehmomentschwankungen lediglich eine Biegebeanspruchung erfahren, die beispielsweise von hochelastischem Federstahlblech ohne weiteres aufgenommen werden kann. Bei alledem wird die Blechstärke so gewählt, daß das Kühlblech 6 elastisch bleibt und nicht zu einer unerwünschten Versteifung des Gummikörpers 4 führt, wobei u.a. sehr hohe Kräfte an den Grenzflächen des Kühlbleches zum Gummi auftreten würden, die ein Loslösen begünstigen könnten.

Als Sicherheitseinrichtungen gegen eventuelles Herausreißen der Kühlbleche 6 aus den Gummikörpern 4 sind in Figur 2 weiterhin Sicherungsbolzen 7 eingezeichnet, welche die Kühlfenster 5 im Normalfall berührungslos durchgreifen und fest mit den Anschlußflanschen verbunden sind. Für den Fall, daß sich ein Kühlblech 6 löst und aufgrund der Fliehkraft radial nach außen zu fliegen droht, wird es durch die Sicherungsbolzen 7 radial zurückgehalten.

Die in Anordnung erfindungsgemäßer Kühlbleche 6 oder auch faserartiger Kühlfinger oder -lamellen aus gut wärmeleitenden Material ist prinzipiell nicht auf die dargestellten Gummikörper 4, die als Torsionselemente ausgebildet sind, beschränkt. Sie können ebenso in Drehschubelemente einvulkanisiert werden, bei denen das Drehmoment jeweils über die innere bzw. äußere Mantelfläche ein- bzw. abgeleitet wird.

Gemäß der erfindungsgemäßen Lehre ist bei der Auslegung der Kühlbleche 6 hinsichtlich ihrer Form und Abmessungen und ihrer Anordnung in den Gummikörpern 4 lediglich zu berücksichtigen, daß die Kühlkörper durch die Bereiche maximaler Wärmeentwicklung, die sog. Wärmenester, führen und eine Wärmebrücke zur Ableitung der Verlustwärme hin zu kühleren Bereichen oder der Außenluft bilden.

Aufgrund der erfindungsgemäßen Ausgestaltung wird im Innern der Gummikörper 4 eine niedrigere Temperatur bzw. ein flacherer Temperaturgradient erreicht, wodurch die Lebensdauer der Gummikörper 4 entsprechend zunimmt.

## Patentansprüche

1. Elastische Wellenkupplung (1) mit mindestens einem einstückigen elastischen Übertragungselement (4) zur Drehmomentübertragung, an dem anund abtriebsseitig Anschlußelemente (3) fest angebracht sind, **dadurch gekennzeichnet, daß** im Übertragungselement (4) mindestens ein Kühlelement (6) aus gut wärmeleitendem Material unlösbar eingebettet ist, wobei das Kühlelement (6) durch einen Kernbereich maximaler Wärmeentwicklung und einem relativ dazu kühleren Außenbereich des Übertragungselementes (4) verläuft.

2. Wellenkupplung nach Anspruch 1, **dadurch gekennzeichnet, daß** das Übertragungselement aus einem vulkanisierten Gummikörper (4) besteht, an dem metallische Anschlußelemente (3) anvulkanisiert sind und in dem das Kühlelement (6) einvulkanisiert ist.

3. Wellenkupplung nach Anspruch 1, **dadurch gekennzeichnet, daß** das Kühlelement (6) ein biegeelastisches Kühl blech ist.

4. Wellenkupplung nach Anspruch 1, **dadurch gekennzeichnet, daß** das Kühlelement (6) eine Mehrzahl von Wärmeleitfasern aufweist.

5. Wellenkupplung nach Anspruch 1, **dadurch gekennzeichnet, daß** eine Seitenkante des Kühlelementes (6) mit der Oberfläche des Übertragungselementes (4) abschließt.

6. Wellenkupplung nach Anspruch 1, **dadurch gekennzeichnet, daß** das Kühlelement (6) über die Oberfläche des Übertragungselementes (4) vorsteht.

7. Wellenkupplung nach Anspruch 3, **dadurch gekennzeichnet, daß** das Kühlblech (6) aus hochfestem Federstahl besteht.

8. Wellenkupplung nach Anspruch 3, **dadurch gekennzeichnet, daß** das Kühlblech (6) mit mindestens einer Durchbrechung (5) versehen ist.

9. Wellenkupplung nach Anspruch 3, **dadurch gekennzeichnet, daß** das Kühlblech (6) bezüglich der Kupplungsachse in einer Axialebene liegt.

10. Wellenkupplung nach Anspruch 3, **dadurch gekennzeichnet, daß** das Kühlblech (6) auf einer zur Kupplungsachse koaxialen Zylinderfläche liegt.

11. Wellenkupplung nach Ansprüchen 9 oder 10, **dadurch gekennzeichnet, daß** das Kühlblech (6) radial segmentiert ist.

12. Wellenkupplung nach Anspruch 1, **dadurch gekennzeichnet, daß** das Übertragungselement (4) ein Torsionselement ist.

13. Wellenkupplung nach Anspruch 1, **dadurch gekennzeichnet, daß** das Übertragungselement (4) ein Drehschubelement ist.

14. Wellenkupplung nach Anspruch 1, **dadurch gekennzeichnet, daß** sie eine Mehrzahl von einstückigen, segmentförmigen Übertragungselementen (4) aufweist.

15. Wellenkupplung nach Anspruch 1, **dadurch gekennzeichnet, daß** das Übertragungselement (4) ein durchgehendes Fenster (5) aufweist.

16. Wellenkupplung nach Anspruch 1, **dadurch gekennzeichnet, daß** das Übertragungselement (4) Sicherungsmittel (7) aufweist, die das Kühlelement (6) berührungslos umgreifen.

17. Wellenkupplung nach Anspruch 16, **dadurch gekennzeichnet, daß** die Sicherungsmittel Rückhalteanker (7) aufweisen, die das Kühlelement (6) durchgreifen.

## Claims

1. Elastic shaft coupling (1) with at least one single-piece elastic transfer element (4) for transferring torque, to which connector elements (3) are attached in a fixed manner at the drive end and the output end, **characterised in that** at least one cooling element (6) of efficient heat conducting material is permanently embedded in the transfer element, whereby the cooling element (6) passes through a core area of maximum heat development, and a comparatively cooler outer area of the transfer element (4).

2. Shaft coupling according to claim 1, **characterised in that** the transfer element is composed of a vulcanised rubber body (4) onto which metallic connector elements (3) are vulcanised, and into which the cooling element (6) is vulcanised.

3. Shaft coupling according to claim 1, **characterised in that** the cooling element (6) is a flexibly elastic cooling plate.

4. Shaft coupling according to claim 1, **characterised in that** the cooling element (6) is provided with a plurality of thermally conductive fibres.

5. Shaft coupling according to claim 1, **characterised in that** one side edge of the cooling element (6) terminates at the surface of the transfer element (4).

6. Shaft coupling according to claim 1, **characterised in that** the cooling element (6) protrudes above the surface of the transfer element (4).

7. Shaft coupling according to claim 3, **characterised in that** the cooling plate (6) is composed of high-tensile strength spring steel.

8. Shaft coupling according to claim 3, **characterised in that** the cooling plate (6) is provided with at least one opening (5).

9. Shaft coupling according to claim 3, **characterised in that** the cooling plate (6) lies in an axial plane with respect to the coupling axis.

10. Shaft coupling according to claim 3, **characterised in that** the cooling plate (6) lies on a cylindrical surface coaxial with respect to the coupling axis.

11. Shaft coupling according to claim 9 or 10, **characterised in that** the cooling plate (6) is radially segmented.

12. Shaft coupling according to claim 1, **characterised in that** the transfer element (4) is a torsion element.

13. Shaft coupling according to claim 1, **characterised in that** the transfer element (4) is a tangential force element.

14. Shaft coupling according to claim 1, **characterised in that** it is provided with a plurality of single-piece, segment shaped transfer elements (4).

15. Shaft coupling according to claim 1, **characterised in that** the transfer element (4) is provided with a through-window (5).

16. Shaft coupling according to claim 1, **characterised in that** the transfer element (4) is provided with protective means (7) that surround the cooling element (6) without touching it.

17. Shaft coupling according to claim 16, **characterised in that** the protective means are provided with restraining bolts that surround the cooling element (6).

## Revendications

1. Accouplement d'arbre élastique (1) avec au moins un élément de transmission élastique en une pièce (4) pour la transmission du couple de rotation auquel sont fixés solidement, côtés menant et mené, des éléments de raccordement (3), **caractérisé en ce qu'**il est noyé d'une manière non amovible dans l'élément de transmission (4) au moins un élément de refroidissement (6) en un matériau bon conducteur de chaleur, où l'élément de refroidissement (6) s'étend à travers une zone centrale de génération de chaleur maximale et une zone extérieure plus froide relativement à celle-ci de l'élément de transmission (4).

2. Accouplement d'arbre selon la revendication 1, **caractérisé en ce que** l'élément de transmission est constitué d'un corps en caoutchouc vulcanisé (4) auquel sont rapportés par vulcanisation des éléments de raccordement métalliques (3) et dans lequel l'élément de refroidissement (6) est introduit par vulcanisation.

3. Accouplement d'arbre selon la revendication 1, **caractérisé en ce que** l'élément de refroidissement (6) est une tôle de refroidissement élastique en flexion.

4. Accouplement d'arbre selon la revendication 1, **caractérisé en ce que** l'élément de refroidissement (6) présente une pluralité de fibres conductrices de chaleur.

5. Accouplement d'arbre selon la revendication 1, **caractérisé en ce qu'**une arête latérale de l'élément de refroidissement (6) se termine en affleurement avec la surface de l'élément de transmission (4).

6. Accouplement d'arbre selon la revendication 1, **caractérisé en ce que** l'élément de refroidissement (6) fait saillie sur la surface de l'élément de transmission (4).

7. Accouplement d'arbre selon la revendication 3, **caractérisé en ce que** la tôle de refroidissement (6) est constituée d'un acier à ressort hautement résistant.

8. Accouplement d'arbre selon la revendication 3, **caractérisé en ce que** la tôle de refroidissement (6) est pourvue d'au moins un perçage (5).

9. Accouplement d'arbre selon la revendication 3, **caractérisé en ce que** la tôle de refroidissement (6) se situe dans un plan axial relativement à l'axe d'accouplement.

10. Accouplement d'arbre selon la revendication 3, **caractérisé en ce que** la tôle de refroidissement (6) repose sur une face de cylindre coaxiale à l'axe d'accouplement.

11. Accouplement d'arbre selon les revendications 9 ou 10, **caractérisé en ce que** la tôle de refroidissement (6) est segmentée radialement.

12. Accouplement d'arbre selon la revendication 1, **caractérisé en ce que** l'élément de transmission (4) est un élément à torsion.

13. Accouplement d'arbre selon la revendication 1, **caractérisé en ce que** l'élément de transmission (4) est un élément de rotation et de poussée.

14. Accouplement d'arbre selon la revendication 1, **caractérisé en ce qu'**il présente une pluralité d'éléments de transmission (4) en une pièce, en forme de segment.

15. Accouplement d'arbre selon la revendication 1, **caractérisé en ce que** l'élément de transmission (4) présente une fenêtre traversante (5).

16. Accouplement d'arbre selon la revendication 1, **caractérisé en ce que** l'élément de transmission (4) présente des moyens de sécurité (7) qui entourent sans contact l'élément de refroidissement (6).

17. Accouplement d'arbre selon la revendication 16, **caractérisé en ce que** les moyens de sécurité présentent des ancres de retenue (7) qui passent à travers l'élément de refroidissement (6).
